# FASCICULE DE BREVET EUROPEEN

(11) **EP 2 246 298 B1**
(45) Date de publication et mention de la délivrance du brevet: **25.10.2017**
(21) Numéro de dépôt: 10161195.2
(22) Date de dépôt: 27.04.2010
(51) Int. Cl.: C01B 33/027, C01B 33/029, C01B 33/03, C01B 33/031

(54) **Procede d'elaboration de nanofils de silicium et/ou de germanium**
Herstellungsverfahren von Nanodrähten aus Silizium und/oder Germanium
Method for manufacturing silicon and/or germanium nanowires

(30) Priorité: 28.04.2009 FR 0952780
(43) Date de publication de la demande: 03.11.2010
(73) Titulaire: Commissariat à l'Énergie Atomique et aux Énergies Alternatives, 75015 Paris (FR)
(72) Inventeur: Renard, Vincent, 38500 La Buisse (FR); Jousseaume, Vincent, 38700 Le Sappey en Chartreuse (FR); Jublot, Michaël, 45500 Nevoy (FR)
(74) Mandataire: Ilgart, Jean-Christophe

(56) Documents cités:
- YAO ET AL: "Si nanowires synthesized with Cu catalyst" MATERIALS LETTERS, NORTH HOLLAND PUBLISHING COMPANY. AMSTERDAM, NL, vol. 61, no. 1, 1 janvier 2007 (2007-01-01), pages 177-181, XP005753207 ISSN: 0167-577X
- YEWU WANG ET AL: "Epitaxial growth of silicon nanowires using an aluminium catalyst" NATURE NANOTECHNOLOGY NATURE PUBLISHING GROUP UK, vol. 1, no. 3, décembre 2006 (2006-12), pages 186-189, XP002567844 ISSN: 1748-3387
- YU-CHIAO LIN ET AL: "Growth of SiO2 nanowires without a catalyst via carbothermal reduction of CuO powders; Growth of SiO2 nanowires without a catalyst via carbothermal reduction of CuO powders" NANOTECHNOLOGY, IOP, BRISTOL, GB, vol. 16, no. 9, 1 septembre 2005 (2005-09-01), pages 1648-1654, XP020091276 ISSN: 0957-4484
- CHIH-YUAN KO ET AL: "SiO2- and CuO-enhanced growth of Ge-Si1-xGexOy and GeO2-Si1-xGexOy core-shell nanowires on a Si substrate via carbothermal reduction" NANOTECHNOLOGY IOP PUBLISHING UK, vol. 17, no. 17, 14 septembre 2006 (2006-09-14), pages 4464-4468, XP002567845 ISSN: 0957-4484

## Description

### DOMAINE TECHNIQUE

La présente invention a trait à un procédé d'élaboration de nanofils de silicium et/ou de germanium.

Ce procédé trouve son application dans la réalisation de composants passifs ou actifs, notamment dans la conception de capacités ou de transistors, destinés à entrer dans l'élaboration de circuits intégrés, par exemple CMOS (CMOS signifiant « Complementary Metal Oxide Semiconductor »), dans la mesure où ce procédé permet de travailler dans des gammes de températures compatibles avec ce type de circuit et permettant de préserver l'intégrité des dispositifs intégrés dans les niveaux inférieurs ainsi que des matériaux d'interconnexion présents dans ces circuits. Il permet ainsi de constituer une alternative aux procédés de lithographie/gravure (intitulés procédés « Top-down ») utilisés couramment dans ce domaine.

Ce procédé peut également trouver son application dans le domaine de l'optique, de la production photovoltaïque, du stockage de l'énergie ou de la détection chimique et biologique.

Le domaine de l'invention peut être considéré comme celui de la préparation des nanofils, en particulier des nanofils de silicium.

### ÉTAT DE LA TECHNIQUE ANTÉRIEURE

Classiquement, les nanofils sont réalisés sur un substrat par croissance résultant de la dissociation chimique de précurseurs gazeux catalysée par des éléments métalliques.

C'est le cas des nanofils de silicium préparés à partir d'un catalyseur en or métallique et de précurseurs gazeux à base de silicium selon un mécanisme vapeur-liquide-solide (intitulé aussi mécanisme VLS), tel que décrit dans Applied Physics Letters, Vol. 4, n°5, p.89-90 *[1].*

Plus précisément, la fabrication de nanofils de silicium a été réalisée de la façon suivante :
- une étape de dépôt sur un substrat en silicium d'orientation cristalline donnée (<111>) d'une couche en or métallique dans une chambre de croissance ;
- une étape de chauffage du substrat, de sorte à provoquer un démouillage de ladite couche sous forme de particules solides d'or métallique grâce à une minimisation de l'énergie de surface et de l'interaction de la couche d'or avec le substrat ;
- une étape d'introduction dans la chambre de croissance d'un précurseur gazeux à base de silicium SiCl₄ en présence d'hydrogène ;
- une étape de chauffage de ladite chambre à une température supérieure à la température de l'eutectique du système Au/Si.

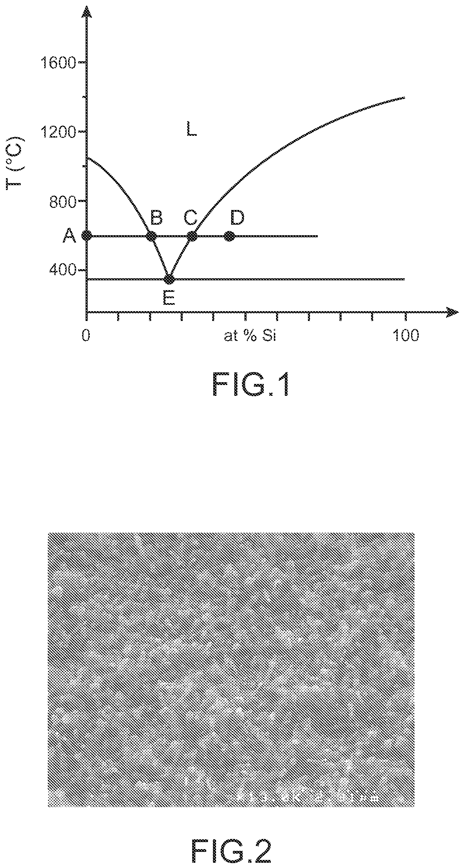

D'un point de vue fondamental, la croissance des nanofils de silicium à partir du catalyseur en or métallique peut s'expliquer en se basant sur le diagramme de phases Au/Si représenté sur la figure 1 jointe en annexe (l'ordonnée représentant la température T(°C) et l'abscisse la teneur en silicium %at Si).

A la température supérieure à la température de l'eutectique (Point A sur la figure 1, la température de l'eutectique étant représentée par le point E), le précurseur gazeux susmentionné se dissocie au contact des particules en or métallique, contribuant à une incorporation graduelle d'atomes de silicium dans lesdites particules. Ce phénomène se traduit sur le diagramme de phases par un déplacement sur une ligne horizontale à partir du point A, traduisant l'enrichissement des particules d'or métallique en silicium. Lorsque la quantité de silicium incorporée est suffisamment importante, les particules passent à l'état liquide (à partir du point B du diagramme). En continuant d'augmenter la teneur en silicium dans celles-ci, un nouvel équilibre thermodynamique se crée à partir d'une teneur en silicium correspondant au point C du diagramme, ce nouvel équilibre se matérialisant par une précipitation des particules de silicium solide à la base de la goutte formée sur le substrat. Au-delà de la teneur indiquée par le point C, par exemple au point D, il y a croissance des nanofils, tant que l'apport en silicium n'est pas stoppé. La période comprise entre le démouillage et la précipitation est habituellement dénommée phase d'incubation.

Ainsi, l'or peut constituer un catalyseur intéressant pour la croissance de nanofils de silicium de bonne qualité.

Toutefois, dès lors que les nanofils sont destinés à être intégrés dans des dispositifs, tels que des dispositifs faisant partie de la filière « above IC », ce catalyseur ne peut pas être retenu car il est considéré comme un élément contaminant et donc proscrit par les industriels. Qui plus est, il est à l'origine de la création de centres de recombinaison profonds dans le silicium nuisant ainsi fortement aux propriétés électriques de celui-ci.

L'utilisation de ce catalyseur est donc impossible actuellement dans les salles blanches industrielles, notamment celles où se conçoivent les dispositifs électroniques dits « CMOS » (CMOS signifiant « complementary metal oxide semiconductor »).

Pour contourner cet obstacle, certains auteurs ont axé leurs travaux sur l'utilisation d'autres catalyseurs métalliques, tels que l'aluminium comme décrit dans Nature Technology, vol.1, Décembre 2006, p.186-189 *[2]* ou le cuivre métallique comme décrit dans Material Letters, 61 (2007), p.177-181 *[3].*

Cependant, ces métaux ne permettent une synthèse de nanofils (incluant à la fois l'étape de démouillage du métal, l'étape d'incubation puis l'étape de croissance en tant que telle) qu'à des températures élevées (au-delà de 500°C), ce qui rend ces catalyseurs difficilement utilisables pour des applications ne tolérant pas des températures aussi élevées.

En outre, le document Material Letters, vol. 61, n°1, p.177-181 décrit la synthèse de nanofils de silicium comprenant les étapes suivantes
- une étape de dépôt sur un substrat de nanoparticules de cuivre par pulvérisation à partir d'une cible en cuivre ;
- une étape de chauffage dudit substrat à une température de 500°C ;
- une étape de mise en contact dudit substrat ainsi chauffé avec un précurseur de silicium : SiH₄, moyennant quoi il y a croissance de nanofils de silicium.

Le document Nature Technology, vol.1, 2006, p. 186-189 décrit la croissance épitaxique de nanofils de silicium mettant en oeuvre un catalyseur à base d'aluminium.

Enfin, le document Nanotechnology 16 (2005), p.1648-1654 décrit un procédé d'élaboration de nanofils de SiO₂ comprenant les étapes suivantes :
- une étape de préparation d'un mélange de poudres CuO/Graphite ;
- une étape de mise en contact de ce mélange avec un substrat en silicium préalablement débarrassé de sa couche d'oxyde ;
- une étape de chauffage de l'ensemble résultant de l'étape précédente à une température allant de 1000 à 1100°C pour une durée allant de 2 à 50 minutes sous flux d'argon, moyennant quoi l'on obtient une croissance de nanofils de SiO₂.

Le mécanisme mis en jeu consiste en une réduction carbothermique du CuO, qui génère du cuivre et du dioxyde de carbone, ce dernier agissant comme agent oxydant pour former avec le silicium du substrat du SiO à l'état gazeux, qui se combine avec de l'oxygène pour donner des nanofils d'oxyde de silicium.

Ainsi, il existe, à l'heure actuelle, un véritable besoin pour un procédé d'élaboration de nanofils de silicium et/ou de germanium qui surmonte les inconvénients susmentionnés et présente les avantages suivants :
- un procédé pouvant être mis en oeuvre à des températures inférieures à 450°C, ce qui permet d'élargir ainsi le panel d'applications de ce procédé à des domaines ne tolérant pas des températures très élevées et contribuant aussi à diminuer le budget thermique alloué à sa mise en oeuvre ;
- un procédé n'engendrant pas de contamination des nanofils à partir des éléments constitutifs des catalyseurs ;
- un procédé permettant l'obtention de nanofils organisés du point de vue cristallin et présentant peu de défauts.

### EXPOSÉ DE L'INVENTION

Les auteurs ont découvert, de façon surprenante qu'en utilisant un composé particulier, il est possible de surmonter l'ensemble des inconvénients susmentionnés.

Ainsi, l'invention a trait à un procédé d'élaboration de nanofils de silicium et/ou de germanium sur un substrat comprenant une étape de mise en contact d'un précurseur comprenant du silicium et/ou d'un précurseur comprenant du germanium avec un composé comprenant de l'oxyde de cuivre présent sur ledit substrat, qui est un substrat en silicium, éventuellement recouvert d'une couche barrière à la diffusion du cuivre présent dans ledit composé, ladite étape de mise en contact consistant à faire passer sur le composé comprenant de l'oxyde de cuivre un courant de précurseur comprenant du silicium et/ou un précurseur comprenant du germanium à un débit et une durée efficaces pour obtenir la croissance de nanofils à base de silicium et/ou de germanium.

On précise que par nanofils de silicium et/ou de germanium, on entend des nanofils de silicium, des nanofils de germanium ou des nanofils comprenant à la fois du silicium et du germanium.

En procédant de la sorte, à savoir en mettant en contact les précurseurs comprenant du silicium et/ou du germanium avec un composé comprenant de l'oxyde de cuivre, les auteurs sont allés à l'encontre de l'idée communément admise que la croissance de nanofils ne peut s'opérer en présence d'un composé oxydé, tel que cela a pu être constaté avec l'aluminium.

Qui plus est, les auteurs ont pu mettre en évidence que l'utilisation d'un composé comprenant de l'oxyde de cuivre permet de diminuer fortement la température de croissance des nanofils par rapport aux modes de réalisation proposés dans l'art antérieur.

D'autre part, les composés comprenant de l'oxyde de cuivre sont autorisés dans les salles blanches, où sont élaborés les dispositifs électroniques.

Le substrat sur lequel est réalisé le procédé est un substrat en silicium éventuellement recouvert d'une couche barrière à la diffusion du cuivre présent dans le composé. Cette couche barrière peut être en un métal, tel que du tantale ou en un nitrure métallique, tel que du nitrure de tantale, du nitrure de titane, et éventuellement un mélange à la fois d'un métal et d'un nitrure métallique tel qu'un mélange TaN/Ta.

Préalablement à l'étape de mise en contact, le procédé de l'invention peut comprendre, en outre, une étape d'élaboration du composé comprenant de l'oxyde de cuivre sur le substrat.

Cette étape peut être réalisée selon différentes variantes.

Selon une première variante, elle peut consister à déposer directement sur le substrat le composé comprenant de l'oxyde de cuivre par électrochimie ou pulvérisation réactive.

Selon une seconde variante, elle peut consister dans un premier temps, à déposer sur ledit substrat du cuivre métallique (c'est-à-dire du cuivre au degré d'oxydation zéro) par des techniques de dépôt classiques telles que le dépôt physique en phase vapeur, le dépôt chimique en phase vapeur, le dépôt électrochimique puis, dans un deuxième temps, à oxyder, en tout ou partie, le cuivre métallique en oxyde de cuivre. Il est envisageable également de combiner une technique de dépôt précédemment citée avec une étape de lithographie pour obtenir une géométrie de dépôt particulière.

Cette étape d'oxydation peut consister classiquement à faire passer un flux d'oxygène sur le cuivre métallique déposé sur le substrat, la pression d'oxygène et la durée de passage étant réglées de sorte à obtenir le taux d'oxydation désiré. Cette étape peut consister également à appliquer au cuivre métallique un plasma d'oxygène.

A titre d'exemple, la pression en oxygène peut aller de 0,1 Torr à 100 Torr et la durée de passage peut aller de 5 secondes à plusieurs dizaines de minutes.

Une fois l'oxydation réalisée, le substrat ayant à sa surface le composé comprenant de l'oxyde de cuivre est mis en contact avec un précurseur à base de silicium et/ou un précurseur à base de germanium.

Ce composé comprenant de l'oxyde de cuivre se présente, avantageusement, sous forme de particules distinctes les unes des autres. Le composé comprenant de l'oxyde de cuivre peut consister uniquement en de l'oxyde de cuivre ou en un mélange de cuivre et d'oxyde de cuivre.

Le précurseur comprenant du silicium peut être le silane SiH₄, le disilane (Si₂H₆) ou le trisilane (Si₃H₈).

Le précurseur peut être aussi un halogénosilane SiX₄, X étant un atome d'halogène, par exemple un atome de chlore.

Le précurseur comprenant du germanium peut être le germane (GeH₄), le digermane (Ge₂H₆) ou le trigermane (Ge₃H₈).

Le précurseur peut être dilué à un gaz vecteur neutre tel que l'azote N₂, l'argon Ar ou l'hélium He.

Le précurseur peut être dilué également avec un gaz réducteur H₂ ou NH₃.

Lorsque les nanofils de silicium et/ou de germanium contiennent au moins un agent dopant, l'étape de mise en contact comprendra également, outre la mise en contact avec les précurseurs susmentionnés, la mise en contact avec un agent dopant, tel que le diborane, la phosphine.

Concrètement, l'étape de mise en contact de l'invention consiste à faire passer sur le composé comprenant de l'oxyde de cuivre un courant de précurseur comprenant du silicium et/ou de précurseur comprenant du germanium, éventuellement sous forme de plasma et éventuellement un gaz vecteur et/ou un gaz réducteur et/ou un dopant à un débit et une durée efficaces pour obtenir la croissance de nanofils à base de silicium et/ou de germanium. Cela correspond à la technique de dépôt chimique en phase vapeur (CVD). Le dépôt pourra être assisté par un plasma (par exemple, selon la technique PECVD correspondant à « Plasma enhanced Chemical Vapor Déposition »).

A titre d'exemple, le débit en précurseur peut aller de 1 sccm à 5000 sccm et la durée de passage peut aller de 10 secondes à plusieurs heures.

Cette étape de mise en contact est réalisée classiquement à une température inférieure à 450°C, par exemple inférieure à 400°C, notamment lorsque le procédé est destiné à être mis en oeuvre ; dans la filière microélectronique. Elle peut être mise en oeuvre ; également à des températures plus élevées si besoin est.

Outre les étapes susmentionnées, le procédé de l'invention peut comprendre, lorsqu'il comporte une étape de préparation du composé comprenant de l'oxyde de cuivre par oxydation de cuivre métallique, également les étapes suivantes :
- une étape de mise en contact du cuivre métallique présent à la surface du substrat avec un agent réducteur, avant l'étape d'oxydation ;
- le cas échéant, une étape de pompage de sorte à supprimer le gaz réducteur après l'étape de contact susmentionnée et avant l'étape d'oxydation ;
- une étape de pompage avant l'étape de mise en contact avec le précurseur comprenant du silicium et/ou le précurseur comprenant du germanium, de sorte à supprimer l'oxygène de l'étape d'oxydation n'ayant pas réagi.

L'étape de mise en contact avec un agent réducteur peut consister concrètement à faire passer sur le cuivre métallique un flux d'agent réducteur, éventuellement sous forme de plasma, de sorte à supprimer toute trace d'oxyde pouvant être présente dans le cuivre. Cette étape a pour vocation de permettre de contrôler l'oxydation du cuivre et de cantonner celle-ci uniquement à l'étape d'oxydation susmentionnée. L'agent réducteur peut être de l'ammoniac NH₃ ou de l'hydrogène H₂.

Les étapes de pompage consistent classiquement à connecter la chambre dans laquelle se déroule le procédé de l'invention à une pompe à vide permettant d'extirper tout gaz présent dans l'enceinte.

Lorsque cette étape est destinée à supprimer la présence de l'agent réducteur, cela permet d'éviter un contact ultérieur entre cet agent et celui permettant l'étape d'oxydation du cuivre.

Lorsque cette étape est destinée à supprimer la présence de l'oxygène utilisé lors de l'étape d'oxydation du cuivre, cela permet d'éviter un contact ultérieur entre l'oxygène et le précurseur comprenant du silicium, tel que SiH₄, lequel contact pouvant générer un mélange explosif dans certaines proportions.

Le procédé peut être un procédé d'élaboration de nanofils de silicium.

Selon un mode de réalisation particulier, le procédé de l'invention comprend :
- une étape d'oxydation de cuivre métallique présent sur un substrat par passage d'un courant d'oxygène, moyennant quoi l'on obtient le composé comprenant de l'oxyde de cuivre ;
- une étape de mise en contact dudit composé avec un flux de SiH₄, éventuellement sous forme de plasma, pendant une durée efficace pour obtenir une croissance de nanofils de silicium.

Selon une variante de réalisation, le procédé de l'invention comprend :
- une étape de dépôt sur le substrat du composé comprenant de l'oxyde de cuivre ;
- une étape de mise en contact dudit composé avec un flux de SiH₄, éventuellement sous forme de plasma, pendant une durée efficace pour obtenir une croissance de nanofils de silicium.

Le procédé de l'invention permet d'obtenir des nanofils à base de silicium, tels que des nanofils de silicium cristallin et présentant peu ou pas de défauts cristallins, ce qui les rend plus appropriés pour le transport électrique.

Les nanofils obtenus par le procédé de l'invention présentent, avantageusement, un diamètre allant de 5 nm à 500 nm et, par exemple, une longueur allant de 10 nm à plusieurs micromètres ou dizaines de micromètres.

Le procédé de l'invention peut trouver des applications dans de nombreux domaines, parmi lesquels on peut citer :
- la réalisation de composants passifs, tels que des capacités, en particulier sur des circuits intégrés (on parle dans ce cas de réalisation de composants « above IC »), les températures de mise en oeuvre ; du procédé n'engendrant pas de dégradation des circuits intégrés sous-jacents ;
- la réalisation de cellules photovoltaïques ;
- la réalisation d'électrodes de batteries, telles que des batteries fonctionnant au lithium ;
- la réalisation de capteurs pour la détection chimique et biologique.

L'invention va être à présent décrite au regard des exemples ci-dessous donnés à titre illustratif et non limitatif.

### BRÈVE DESCRIPTION DES DESSINS

La figure 1 représente un diagramme de phases pour le système Au/Si.
La figure 2 est un cliché pris par microscopie électronique à balayage des nanofils obtenus conformément au mode de réalisation explicité dans l'exemple 1 ci-dessous.
La figure 3 est un cliché pris par microscopie électronique à balayage d'un substrat (vue de dessus) après un essai réalisé sans étape d'oxydation conformément à ce qui est explicité dans l'exemple 2 ci-dessous.
Les figures 4 et 5 représentent des clichés pris par microscopie électronique à balayage (respectivement vue de section et vue de dessus) des nanofils obtenus conformément au mode de réalisation explicité dans l'exemple 2 ci-dessous.
Les figures 6 et 7 représentent des images haute résolution prises par microscopie électronique à transmission d'un nanofil de silicium de 20-30 nm de diamètre obtenu conformément à l'exemple 2 figurant ci-dessous.
La figure 8 représente un spectre obtenu par analyse dispersive en énergie des rayons X (l'abscisse représentant l'énergie E (en keV) d'un nanofil (courbe b) obtenu conformément à l'exemple 2 figurant ci-dessous.
La figure 9 représente un cliché pris par microscopie électronique à balayage de nanofils obtenus conformément au mode de réalisation explicité dans l'exemple 3.

### EXPOSÉ DÉTAILLÉ DE MODES DE RÉALISATION PARTICULIERS

### EXEMPLE 1

Dans cet exemple, il est procédé à la réalisation de nanofils de silicium par un mode de réalisation particulier conforme au procédé de l'invention. Cet exemple a été mis en oeuvre ; avec un équipement de dépôt industriel de type CENTURA 5200 acceptant des substrats de 200 mm.

Le substrat utilisé est un substrat en silicium présentant une orientation cristalline (100), dont la face destinée à servir de support à la réalisation des nanofils, est recouverte d'une couche barrière TaN/Ta de 10 nm.

Sur la couche barrière est déposée une couche de cuivre d'une épaisseur de 20 nm par dépôt physique en phase vapeur.

Le substrat est ensuite soumis à un flux d'oxygène de sorte à oxyder en partie le cuivre déposé.

De sorte à éliminer l'oxygène n'ayant pas réagi au cours de l'étape d'oxydation, le substrat est soumis à une étape de pompage et ce afin d'éviter ultérieurement tout contact entre l'oxygène et le précurseur de silicium SiH₄, lequel mélange peut se révéler explosif.

Enfin, le substrat est soumis à une étape de mise en contact avec un précurseur de silicium, le silane SiH₄, à une pression suffisante pour engendrer la croissance des nanofils.

Les caractéristiques précises des différentes étapes mentionnées ci-dessus figurent dans le tableau ci-dessous.

| Etapes | Gaz | Débit du flux | Pression | Durée |
|---|---|---|---|---|
| Oxydation | O₂ | 250 sccm* | 1 Torr | 180 s |
| Pompage | - | - | - | 20 s |
| Mise en contact avec précurseur de silicium | SiH₄ | 100 sccm* | 30 Torr | 2400 s |
| Pompage | - | - | - | 20 s |

| | | | | |
|---|---|---|---|---|
| * sccm signifiant un centimètre cube par minute dans les conditions suivantes (T=0°C (32 °F) et P=101325 Pa). | | | | |

L'ensemble des étapes a été mis en oeuvre ; à une température d'au plus 400°C.

Un cliché du substrat (vue de dessus) obtenu à l'issue de cet exemple représenté sur la figure 2 a été pris par microscopie électronique à balayage (MEB) attestant d'une croissance efficace de nanofils sur toute la surface du substrat.

### EXEMPLE 2

Dans cet exemple, il est procédé à la réalisation de nanofils de silicium par un mode de réalisation particulier conforme au procédé de l'invention. Cet exemple a été mis en oeuvre ; avec un équipement de dépôt industriel de type CENTURA 5200 acceptant des substrats de 200 mm.

Le substrat utilisé est un substrat en silicium présentant une orientation cristalline (100), dont la face destinée à servir de support à la réalisation des nanofils, est recouverte d'une couche barrière TaN/Ta de 10 nm.

Sur la couche barrière est déposée une couche de cuivre d'une épaisseur de 20 nm par dépôt physique en phase vapeur.

Le substrat est soumis ensuite à un premier passage d'un flux d'ammoniac puis, à un second passage sous forme de plasma NH₃, de sorte à supprimer les éventuelles traces d'oxyde présentes à la surface du cuivre. Cette étape est destinée à faire en sorte de contrôler l'oxydation du cuivre en basant celle-ci uniquement sur la formation choisie d'oxyde par le passage du flux de dioxygène subséquent.

Afin d'éliminer toutes traces de NH₃, le substrat ainsi traité est soumis à une étape de pompage avant d'être soumis à une étape d'oxydation.

Le substrat est ensuite soumis à une étape de passage d'oxygène de sorte à oxyder en partie le catalyseur.

De sorte à éliminer l'oxygène n'ayant pas réagi au cours de l'étape d'oxydation, le substrat est, de nouveau, soumis à une étape de pompage et ce afin d'éviter ultérieurement tout contact entre l'oxygène et le précurseur de silicium SiH₄, lequel mélange pouvant se révéler explosif.

Enfin, le substrat est soumis à une étape de mise en contact avec un précurseur de silicium, le silane SiH₄, à une pression suffisante pour engendrer la croissance des nanofils.

Les caractéristiques précises des différentes étapes mentionnées ci-dessus figurent dans le tableau ci-dessous.

| Etapes | Gaz | Flux | Pression | Durée | Autres |
|---|---|---|---|---|---|
| Désoxydation | | | | | |
| -1^{er} passage | NH₃ | 200 sccm* | 6 Torr | 25 s | |
| -2^{nd} passage (Plasma) | NH₃ | 100 sccm* | 6 Torr | 30 s | 250 W |
| Pompage | - | - | - | 20 s | - |
| Oxydation | O₂ | 250 sccm* | 2 Torr | 180 s | - |
| Pompage | - | - | - | 20 s | |
| Mise en contact avec précurseur de silicium | SiH₄ | 100 sccm* | 30 Torr | 2400 s | - |
| Pompage | - | - | - | 20 s | |

| | | | | | |
|---|---|---|---|---|---|
| *sccm signifiant un centimètre cube par minute dans les conditions suivantes (T=0°C (32°F) et P=101325 Pa) | | | | | |

L'ensemble des étapes a été mis en oeuvre ; à une température d'au plus 400°C.

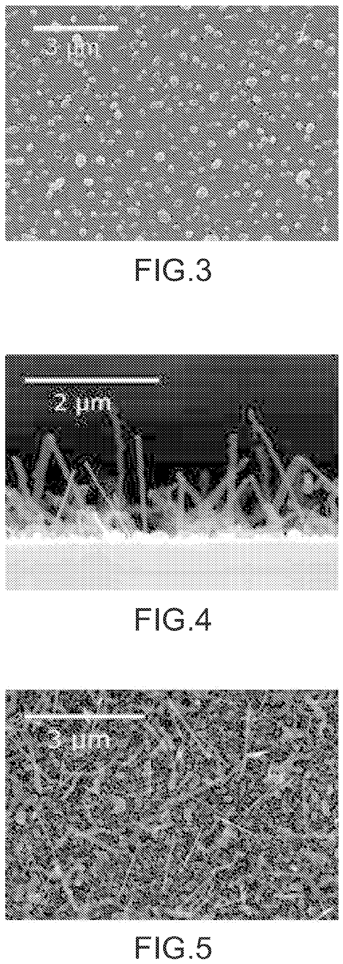

Un cliché du substrat (vue de dessus) obtenu à l'issue de ce mode de réalisation (représenté à la figure 5) a été pris par microscopie électronique à balayage (MEB) attestant d'une croissance efficace de nanofils sur toute la surface du substrat. La figure 4 atteste, quant à elle, la présence de nanofils droits en donnant une vue de section du même essai.

Toutes choses égales par ailleurs, un autre essai a été réalisé en jouant sur la pression d'oxygène appliquée lors de l'étape d'oxydation, à savoir, pour une pression d'oxygène nulle (en d'autres termes, sans étape d'oxydation).

Des clichés des substrats obtenus à l'issue de ce mode de réalisation ont été réalisés, un exemple étant représenté sur la figure 3 (vue de dessus) pour l'essai sans étape d'oxydalion.

La figure 3 atteste de l'absence de nanofils et confirme ainsi la nécessité et l'efficacité de la présente invention.

Des analyses ont également été effectuées par microscopie électronique en transmission (MET) et par spectroscopie de rayons X à dispersion d'énergie de sorte à étudier en détail la qualité structurale des nanofils présentés sur les figures 4 et 5.

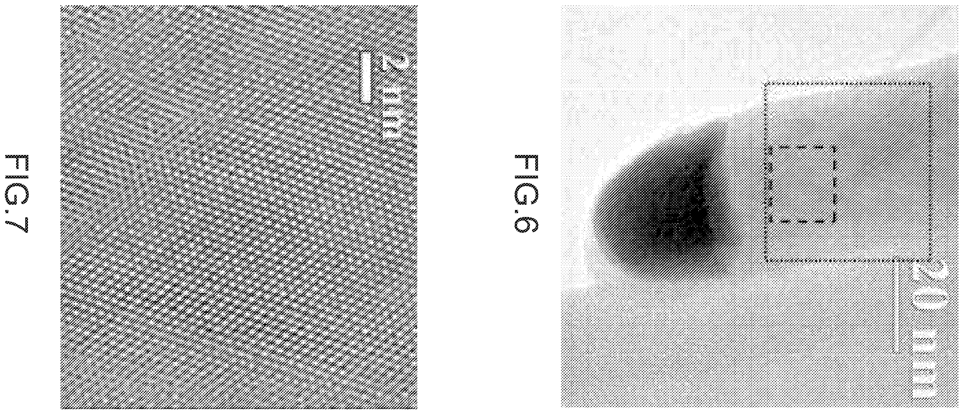

Les figures 6 et 7 montrent des images haute résolution d'un nanofil de silicium de 20-30 nm de diamètre avec un agrandissement en figure 7 attestant d'une organisation parfaitement cristalline du nanofil et la quasi-absence de défauts cristallins. L'on peut ainsi en prédire de bonnes propriétés de conduction des nanofils obtenus.

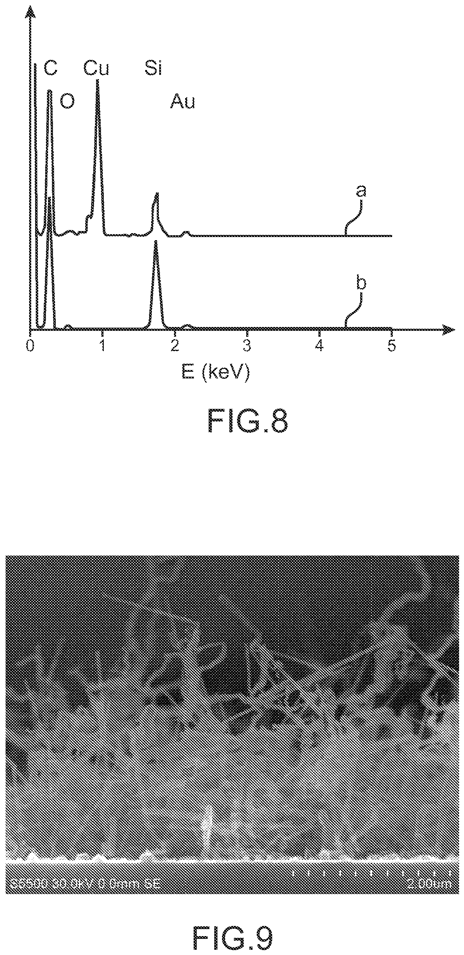

La figure 8 illustre un spectre de rayons X, qui démontre l'absence de cuivre dans le corps des nanofils (courbe b) par rapport au composé comprenant de l'oxyde de cuivre (courbe a), prouvant ainsi la bonne qualité des nanofils obtenus par le procédé de l'invention et montrés sur les figures 6 et 7.

### EXEMPLE 3

Dans cet exemple, il est procédé à la réalisation de nanofils de silicium par un mode de réalisation particulier conforme au procédé de l'invention. Le procédé a été testé sur un équipement de dépôt industriel de type CENTURA 5200 acceptant des substrats de 200mm.

Le substrat utilisé est un substrat en silicium présentant une orientation cristalline (100), dont la face destinée à servir de support à la réalisation des nanofils, est recouverte d'une couche barrière ici, TiN de 10nm. Sur la couche barrière est déposée une couche d'oxyde de cuivre de 20 nm déposé par pulvérisation réactive.

Le substrat est soumis à une étape de mise en contact avec un précurseur de silicium, le silane SiH₄, à une pression suffisante pour engendrer la croissance des nanofils. Il n'y a pas d'étape d'oxydation puisque l'oxyde de cuivre est directement déposé.

Les caractéristiques précises des différentes étapes mentionnées ci-dessus figurent dans le tableau ci-dessous.

| Etapes | Gaz | Flux | Pression | Durée |
|---|---|---|---|---|
| Mise en contact avec précurseur de silicium | SiH₄ | 100 sccm* | 30 Torr | 2400 s |
| Pompage | - | - | - | 20s |

| | | | | |
|---|---|---|---|---|
| *sccm signifiant un centimètre cube par minute dans les conditions suivantes (T=0°C (32°F) et P=101325 Pa) | | | | |

L'ensemble des étapes a été mis en oeuvre ; à une température d'au plus 400°C.

Un cliché du substrat (vue de section) obtenu à l'issue de ce mode de réalisation (représenté à la figure 9) a été pris par microscopie électronique à balayage (MEB) attestant d'une croissance efficace de nanofils sur toute la surface du substrat.

### Références citées

[1] Applied Physics Letters, Vol. 4, n°5, p.89-90
[2] Nature Technology, vol.1, Décembre 2006, p.186-189
[3] Material Letters, 61 (2007), p.177-181

## Revendications

1. Procédé d'élaboration de nanofils de silicium et/ou de germanium sur un substrat comprenant une étape de mise en contact d'un précurseur comprenant du silicium et/ou d'un précurseur comprenant du germanium avec un composé comprenant de l'oxyde de cuivre présent sur ledit substrat, qui est un substrat en silicium, éventuellement recouvert d'une couche barrière à la diffusion du cuivre présent dans ledit composé, ladite étape de mise en contact consistant à faire passer sur le composé comprenant de l'oxyde de cuivre un courant de précurseur comprenant du silicium et/ou un précurseur comprenant du germanium à un débit et une durée efficaces pour obtenir la croissance de nanofils à base de silicium et/ou de germanium.

2. Procédé selon la revendication 1, dans lequel la couche barrière est en un métal, un nitrure métallique ou un mélange de ceux-ci.

3. Procédé selon la revendication 1 ou 2, dans lequel la couche barrière est en tantale, en nitrure de tantale, en nitrure de titane ou un mélange de ceux-ci.

4. Procédé selon l'une quelconque des revendications précédentes, dans lequel le composé comprenant de l'oxyde de cuivre se présente sous forme de particules distinctes les unes des autres.

5. Procédé selon l'une quelconque des revendications précédentes, dans lequel le composé comprenant de l'oxyde de cuivre consiste en de l'oxyde de cuivre seul ou en un mélange de cuivre métallique et d'oxyde de cuivre.

6. Procédé selon l'une quelconque des revendications précédentes, comprenant, en outre, avant l'étape de mise en contact, une étape d'élaboration du composé comprenant de l'oxyde de cuivre sur le substrat.

7. Procédé selon la revendication 6, dans lequel l'étape d'élaboration consiste à déposer directement sur le substrat le composé comprenant de l'oxyde de cuivre.

8. Procédé selon la revendication 6, dans lequel l'étape d'élaboration consiste, dans un premier temps, à déposer sur ledit substrat du cuivre métallique (c'est-à-dire du cuivre au degré d'oxydation zéro) puis, dans un deuxième temps, à oxyder, en tout ou partie, le cuivre métallique en oxyde de cuivre.

9. Procédé selon la revendication 8, dans lequel l'étape d'oxydation consiste à faire passer un flux d'oxygène sur le cuivre métallique déposé sur ledit substrat.

10. Procédé selon l'une quelconque des revendications précédentes, dans lequel le précurseur comprenant du silicium est le silane SiH₄, le disilane Si₂H₆, le trisilane Si₃H₈ ou un halogénosilane SiX₄, X étant un atome d'halogène.

11. Procédé selon l'une quelconque des revendications précédentes, dans lequel le précurseur comprenant du germanium est le germane GeH₄, le digermane Ge₂H₆, le trigermane Ge₃H₈.

12. Procédé selon l'une quelconque des revendications précédentes, dans lequel le précurseur comprenant du silicium et/ou le précurseur comprenant du germanium est dilué avec un gaz vecteur neutre et/ou un gaz réducteur.

13. Procédé selon l'une quelconque des revendications précédentes, dans lequel, lors de l'étape de mise en contact, il est mis en contact un agent dopant avec le précurseur comprenant du silicium et/ou le précurseur comprenant du germanium.

14. Procédé selon la revendication selon l'une quelconque des revendications précédentes, dans lequel le courant de précurseur comprenant du silicium et/ou un précurseur comprenant du germanium se présente sous forme d'un plasma.

15. Procédé selon l'une quelconque des revendications précédentes, dans lequel l'étape de mise en contact est réalisée à une température inférieure à 450°C.

## Patentansprüche

1. Verfahren zur Herstellung von Nanodrähten aus Silicium und/oder aus Germanium auf einem Substrat, umfassend einen Schritt des Inkontaktbringens eines Präkursors, der Silicium umfasst, und/oder eines Präkursors, der Germanium umfasst, mit einer Verbindung, die Kupferoxid umfasst, die auf dem Substrat vorhanden ist, das ein Siliciumsubstrat ist, welches gegebenenfalls mit einer Barriereschicht gegen die Diffusion des in der Verbindung vorhandenen Kupfers bedeckt ist, wobei der Schritt des Inkontaktbringens das Passierenlassen eines Stroms von Präkursor, der Silicium umfasst, und/oder eines Präkursors, der Germanium umfasst, an der Verbindung, die Kupferoxid umfasst, mit einer Rate und einer Dauer enthält, die wirksam sind, um das Wachstum von Nanodrähten auf Basis von Silicium und/oder von Germanium zu erhalten.

2. Verfahren nach Anspruch 1, wobei die Barriereschicht aus einem Metall, einem Metallnitrid oder einer Mischung derselben ist.

3. Verfahren nach Anspruch 1 oder 2, wobei die Barriereschicht aus Tantal, aus Tantalnitrid, aus Titannitrid oder einer Mischung derselben ist.

4. Verfahren nach einem der vorhergehenden Ansprüche, wobei die Verbindung, die Kupferoxid umfasst, die Form von Partikeln aufweist, die voneinander getrennt sind.

5. Verfahren nach einem der vorhergehenden Ansprüche, wobei die Verbindung, die Kupferoxid umfasst, aus reinem Kupferoxid besteht oder aus einer Mischung von metallischem Kupfer und Kupferoxid.

6. Verfahren nach einem der vorhergehenden Ansprüche, ferner umfassend, vor dem Schritt des Inkontaktbringens, einen Schritt der Herstellung der Verbindung, die Kupferoxid umfasst, auf dem Substrat.

7. Verfahren nach Anspruch 6, wobei der Herstellungsschritt ein direktes Aufbringen der Verbindung, die Kupferoxid umfasst, auf dem Substrat umfasst.

8. Verfahren nach Anspruch 6, wobei der Herstellungsschritt zu einem ersten Zeitpunkt ein Aufbringen von metallischem Kupfer (das heißt Kupfer mit dem Oxidationsgrad Null) auf dem Substrat umfasst, und dann, zu einem zweiten Zeitpunkt, ein vollständiges oder partielles Oxidieren des metallischen Kupfers zu Kupferoxid.

9. Verfahren nach Anspruch 8, wobei der Oxidationsschritt ein Passierenlassen eines Sauerstoffstroms an dem metallischen Kupfer umfasst, das auf dem Substrat aufgebracht ist.

10. Verfahren nach einem der vorhergehenden Ansprüche, wobei der Präkursor, der Silicium umfasst, Silan SiH₄ ist, Disilan Si₂H₆, Trisilan Si₃H₈ oder ein Halogensilan SiX₄, wobei X ein Halogenatom ist.

11. Verfahren nach einem der vorhergehenden Ansprüche, wobei der Präkursor, der Germanium umfasst, German GeH₄ ist, Digerman Ge₂H₆, oder Trigerman Ge₃H₈.

12. Verfahren nach einem der vorhergehenden Ansprüche, wobei der Präkursor, der Silicium umfasst, und/oder der Präkursor, der Germanium umfasst, mit einem neutralen Trägergas und/oder einem Reduziergas verdünnt ist.

13. Verfahren nach einem der vorhergehenden Ansprüche, wobei während des Schritts des Inkontaktbringens ein Dotieragens mit dem Präkursor in Kontakt gebracht wird, der Silicium umfasst, und/oder dem Präkursor, der Germanium umfasst.

14. Verfahren nach einem der vorhergehenden Ansprüche, wobei der Strom von Präkursor, der Silicium umfasst, und/oder ein Präkursor, der Germanium umfasst, die Form eines Plasmas aufweist.

15. Verfahren nach einem der vorhergehenden Ansprüche, wobei der Schritt des Inkontaktbringens bei einer Temperatur unterhalb von 450° C durchgeführt wird.

## Claims

1. Method for fabricating silicon and/or germanium nanowires on a substrate, comprising a step of bringing a precursor comprising silicon and/or a precursor comprising germanium in contact with a compound comprising copper oxide present on the said substrate, which is a silicon substrate, optionally covered with a barrier layer against the diffusion of copper present in the said compound, said contact step consisting in passing a stream of precursor comprising silicon and/or precursor comprising germanium over the compound comprising copper oxide, with a flow rate and for a time which are effective for obtaining growth of nanowires based on silicon and/or germanium.

2. Method according to Claim 1, in which the barrier layer is made of a metal, a metal nitride or a mixture thereof.

3. Method according to Claim 1 or 2, in which the barrier layer is made of tantalum, tantalum nitride, titanium nitride, or a mixture thereof.

4. Method according to any one of the preceding claims, in which the compound comprising copper oxide is in the form of particles which are separate from one another.

5. Method according to any one of the preceding claims, in which the compound comprising copper oxide consists of copper oxide on its own or a mixture of the metallic copper and copper oxide.

6. Method according to any one of the preceding claims, furthermore comprising, before the contact step, a step of fabricating the compound comprising copper oxide on the substrate.

7. Method according to Claim 6, in which the fabrication step consists in depositing the compound comprising copper oxide directly on the substrate.

8. Method according to Claim 6, in which the fabrication step consists first in depositing metallic copper (that is to say copper in oxidation state zero) on the said substrate then, secondly, in fully or partially oxidizing the metallic copper to form copper oxide.

9. Method according to Claim 8, in which the oxidation step consists in passing a stream of oxygen over the metallic copper deposited on the said substrate.

10. Method according to any one of the preceding claims, in which the precursor comprising silicon is silane SiH₄, disilane Si₂H₆, trisilane Si₃H₈ or a halosilane SiX₄, X being a halogen atom.

11. Method according to any one of the preceding claims, in which the precursor comprising germanium is germane GeH₄, digermane Ge₂H₆ or trigermane Ge₃H₈.

12. Method according to any one of the preceding claims, in which the precursor comprising silicon and/or the precursor comprising germanium is diluted with a neutral carrier gas and/or a reducing gas.

13. Method according to any one of the preceding claims, in which, during the contact step, a doping agent is brought into contact with the precursor comprising silicon and/or the precursor comprising germanium.

14. Method according to any one of the preceding claims, in which the stream of precursor comprising silicon and/or precursor comprising germanium is in the form of a plasma.

15. Method according to any one of the preceding claims, in which the contact step is carried out at a temperature of less than 450°C.
